(19) Europäisches Patentamt

European Patent Office

Office européen des brevets

(11) **EP 0 490 981 B2**

(12) **NEW EUROPEAN PATENT SPECIFICATION**

(45) Date of publication and mention of the opposition decision:
**27.06.2001 Bulletin 2001/26**

(45) Mention of the grant of the patent:
**22.01.1997 Bulletin 1997/04**

(21) Application number: **90914010.5**

(22) Date of filing: **05.09.1990**

(51) Int Cl.[7]: **C08F 8/30**, C08L 75/16, B32B 9/00, D02G 3/00, C08F 283/00, C03C 25/10, C08G 18/44, C08G 18/81

(86) International application number:
**PCT/US90/05016**

(87) International publication number:
**WO 91/03499 (21.03.1991 Gazette 1991/07)**

(54) **PRIMARY COATINGS FOR OPTICAL GLASS FIBERS INCLUDING POLYETHER ACRYLATES**

PRIMÄRE BESCHICHTUNGEN FÜR OPTISCHE GLASFASERN ENTHALTEND POLYAETHER AKRYLATE

REVETEMENTS PRIMAIRES POUR FIBRES DE VERRE OPTIQUE COMPRENANT DES ACRYLATES DE POLYETHER

(84) Designated Contracting States:
**AT BE CH DE DK ES FR GB IT LI LU NL SE**

(30) Priority: **06.09.1989 US 403596**
**24.07.1990 US 558260**

(43) Date of publication of application:
**24.06.1992 Bulletin 1992/26**

(73) Proprietor: **DSM N.V.**
**6411 TE Heerlen (NL)**

(72) Inventors:
• **COADY, Clive, J.**
**Hanover Park, IL 60103 (US)**
• **POKLACKI, Erwin, S.**
**Arlington Heights, IL 60005 (US)**
• **ZIMMERMAN, John, M.**
**Crystal Lake,IL 60014-1209 (US)**
• **BISHOP, Timothy, E.**
**Algonquin, IL 60102 (US)**
• **DERER, John, L.**
**Arlington Heights, IL 60017 (US)**

(56) References cited:
EP-A- 0 323 546          DE-A- 3 437 531
GB-A- 2 163 443          GB-A- 2 195 643
JP-A- 63 239 139         US-A- 4 255 243
US-A- 4 264 752          US-A- 4 624 994
US-A- 4 690 502

EP 0 490 981 B2

## Description

Technical Field

This invention relates to primary coatings for optical glass fibers that are characterized by greater cure speed, enhanced cured film adhesion and stability, reduced water absorption and superior low temperature performance.

Background of the Invention

Optical glass fibers are frequently coated with two superposed photocured coatings. The coating which contacts the glass is a relatively soft, primary coating. The outer, exposed coating is a much harder secondary coating that provides desired resistance to handling forces, such as those encountered when the fiber is cabled.

The coating of optical glass fibers with photocured coating compositions, usually using ultraviolet light, is well known today. Photocuring compositions, are selected because of their rapid cure speed. Faster cure speed is generally desirable to increase the production of optical glass fibers.

Coatings produced from conventional compositions including (meth)acrylate-terminated polyurethanes are much too hard to be utilized as primary coatings and exhibit poor adhesion and resistance to microbending especially at low service temperatures. When a polyether acrylate monomer having a low glass transition temperature ($T_g$) is added to these compositions in an amount sufficient to provide adequate flexibility, the water resistance and adhesion of the coating are usually reduced which is undesirable.

It is also desirable to further increase the cure speed of the photocuring composition while retaining the capacity of the cured primary coating to adhere to the glass fiber surface and to resist water absorption.

US-4,690,502 discloses a liquid coating composition comprising a polyacrylate-terminated oligomer. The oligomer is a linear polyurethane terminated with an essentially monohydic adduct of a low molecular weight diprimary amine with a monoepoxide and reacted with an acrylate-functional monoisocyanate. The composition further contains a an UV-curable liquid acrylate or polyacrylate to provide liquidity and a photoinitiator. US-4,255,243 describes a photocrosslinkable composition containing a poly-(carbonate-urethane) with acrylic unsaturations, an unsaturated monomer being a reactive solvent and a photoinitiator. US-4,624,994 discloses compositions containing an oligomer, 2-20% by weight of a monoethylenically unsaturated monomer having a Tg below about 10°C and 2-20% by weight of a monoethylenically unsaturated monomer which has a strong capacity of hydrogen bonding. US-4,264,752 discloses acrylated. urethane polycarbonates giving improved tensile strength. The polycarbonates are used either alone or in admixture with conventional solvents, pigments, fillers and other additives. DE-A-3437531 discloses a coating composition comprising a) a urethane(meth)acrylate-oligomer, b) a methacrylate containing a long alifatic group, c) a vinylpyrrolidon, d) an initiator of the benzophenone type and e) an alifatic amine. Component b) may be an acrylate of an alkyl substituted alkoxylated phenol. Component c) (vinylpyrrolidon) has a high glass transition temperature $T_g$ above 40°C. GB-A-2 163 443 describes a composition of 20-80% by weight of a urethane acrylate oligomer and 80-20% by weight of a monofunctional acrylate. The monofunctional acrylate may be a phenoxyalkylacrylate.

The present invention provides compositions suitable as a primary optical glass fiber coating that comprise a (meth) acrylate-terminated polyurethane, a (meth)acrylate of an alkoxylated phenol and produced mono(meth)acrylate having a low $T_g$. The coatings produced from these compositions exhibit good adhesion, flexibility, water resistance and low temperature microbending resistance.

Summary of the Invention

A photocurable liquid coating composition adapted to provide a primary coating for an optical glass fiber is disclosed. The coating composition comprises (1) 40 to 80 weight percent, based on the total weight of the coating composition, of a (meth)acrylate-terminated polyurethane (the "acrylated polyurethane") having a number average molecular weight of 2,500 to 10,000 daltons being the reaction product of a prepolymer having a number average molecular weight of 500 to 3,000 daltons, a diisocyanate and a hydroxy (meth)acrylate; (2) 5 to 50 weight percent of a (meth) acrylate of $C_1$-$C_{10}$ alkyl substituted phenol that is alkoxylated with a $C_2$-$C_4$ alkylene oxide and contains 1 to 10 moles of the oxide per mole of phenol; and (3) 5 to 30 weight percent of at least one alkylacrylate having a glass transition temperature ($T_g$) below -45°C,

The composition can further include a monoethylenically unsaturated material having a $T_g$ greater than 40°C and a strong capacity for hydrogen bonding that is present in an amount in the range of 1 to 15 weight percent, based on the total weight of the coating composition.

Conventional photoinitiators are also present to initiate polymerization by ultraviolet light and visible light near the ultraviolet wavelenght range.

Coatings produced on optical glass fibers from the present coating composition provide good adhesion and enhanced hydrolytic and thermal stability, reduced water absorption and superior low temperature performance, e.g., improved resistance to microbending, as compared to conventional primary coatings.

As previously discussed, poly ether acrylate monomers can be utilized to introduce flexibility in coatings producec from compositions that include (meth)acrylate-terminated polyurethanes. However, these polyether acrylate monomers usually reduce the water resistance and adhesion of the coating. In contradistinction, the present composition utilizes phenol-based (meth)acrylate polyethers, identified previously as component "(2)" of the composition, to introduce softness and flexibility into coatings produced from an acrylated polyurethane while maintaining a desirable degree of water resistance and adhesion. The cure speed is also increased and this is desirable.

Detailed Description of the Preferred Embodiments

Although this invention is susceptible to embodiments in many different forms, preferred embodiments of the invention are shown. It should be understood, however, that the present disclosure is to be considered as an exemplification of the principles of the invention to embodiments illustrated.

A photocurable liquid coating composition adapted to provide a primary coating for an optical glass fiber is disclosed. The coating composition comprises: (1) 40 to 80 weight percent, based on the total weight of the coating composition, of a (meth)acrylate-terminated polyurethane (acrylated polyurethane) having a number average molecular weight of 2,500 to 10,000 daltons and being the reaction product of a prepolymer having a number average molecular weight of 500 to 3,000 daltons, a diisocyanate and a hydroxy (meth)acrylate; (2) 5 to 50 weight percent of a $C_1$-$C_{10}$ alkyl substituted phenol that is alkoxylated with a $C_2$-$C_4$ alkylene oxide and contains 1 to 10 moles of the oxide per mole of phenol [(meth)acrylate of the alkoxylated phenol]; and (3) 5 to 30 weight percent of at least one alkylacrylate having a glass transition temperature ($T_g$) below -45°C.

The term "dalton", in its various grammatical forms, defines a unit of mass that is 1/12 th the mass of carbon-12.

The term "(meth)acrylate", and various grammatical forms thereof, identifies esters that are the reaction product of acrylic or methacrylic acid with a hydroxy group-containing compound.

The term "alkylacrylate" identifies alkyl substituted acrylates, as for example, hexyl acrylate, 2-ethylhexyl acrylate, heptyl acrylate, n-octyl acrylate and isooctyl acrylate.

The term "glass transition temperature", in its various grammatical forms, is defined as the temperature at which the homopolymer of the referred to material changes from a vitreous state to a plastic state.

The (meth)acrylate-terminated polyurethane is the reaction product of a prepolymer, an organic diisocyanate and a hydroxy (meth)acrylate.

The prepolymer is a carbon chain that can comprise oxygen and/or nitrogen atoms to which the terminal (meth) acrylate functionally is added by use of the diisocyanate. Selection of the prepolymer can affect the physical properties of the coatings produced from the oligomer-containing composition.

The prepolymer has on average at least about two prepolymer functional groups that are reactive with the isocyanate group, e.g., a hydroxy, mercapto, amine or similar group. Presently, a preferred prepolymer functional group is the hydroxy group.

The number average molecular weight of the prepolymer is 500 to 3,000 preferably 800 to 2,000, daltons.

Prepolymers are selected from the group consisting essentially of polycarbonates, polyesters, polyethers and mixtures thereof.

Albeit all of the above-described prepolymers provide improved results when utilized with the (meth)acrylate of the alkoxylated phenol, the polycarbonate diols give superior results, especially from the standpoint of hydrolytic and oxidative stability, and thus are preferred.

The polycarbonate diols are conventionally produced by the alcoholysis of diethylcarbonate or diphenylcarbonate with a diol. The diol is an alkylene diol having about 2 to about 12 carbon atoms, e.g., 1,4-butane diol, 1,6-hexane diol, 1,12-dodecane diol and the like, preferably 4 to 8 carbon atoms. Mixtures of these diols can also be utilized. The polycarbonate diol can contain ether linkages in the backbone in addition to carbonate groups. Thus, polycarbonate copolymers of alkylene ether diols and the previously described alkylene diols are suitable. Suitable alkylene ether diols include triethylene glycol, tripropylene glycol and the like. These copolymers produce cured coatings that exhibit a lower modulus and also inhibit crystallinity of the liquid coating composition, as compared to polycarbonate diol homopolymers. Admixtures of the polycarbonate diols and polycarbonate copolymer diols can also be utilized. Suitable polycarbonate diols include Duracarb 122, commercially available from PPG Industries and Permanol KM10-1733, commercially available from Permuthane, Inc., MA. Duracarb 122 is produced by the alcoholysis of diethylcarbonate with hexane diol.

Illustrative polyesters include polybutylene adipate, polycaprolactones and the like.

Illustrative polyethers include poly(propylene oxide), poly(tetramethylene glycol) and the like.

A wide variety of diisocyanates alone or on admixture with one another can be utilized. Representative diisocyanates include isophorone diisocyanate (IPDI), toluene diisocyanate, methylene diphenyl diisocyanate, hexamethylene diisocyanate, cyclohexylene diisocyanate, methylene dicyclohexane diisocyanate, 2,2,4-trimethyl hexamethylene diisocyanate, m-phenylene diisocyanate, 4-chloro-1,3-phenylene diisocyanate, 4,4'-biphenylene diisocyanate, 1,5-naphtylene diisocyanate, 1,4-tetramethylene diisocyanate, 1,6-hexamethylene diisocyanate, 1,10-decamethylene diisocyanate, 1,4-cyclohexylene diisocyanate, and the like. A preferred diisocyanate is IPDI.

The hydroxy (meth)acrylate can be a mono(meth)acrylate or a poly(meth)acrylate. Monohydric monoacrylates are presently preferred. The reaction of the isocyanate group with a hydroxy group of the hydroxy (meth)acrylate produces a urethane linkage which results in the formation of a (meth)acrylate terminated urethane.

Suitable monohydric acrylates are the hydroxy $C_2$-$C_4$ alkyl acrylates and polyacrylates. Illustrative of these acrylates are 2-hydroxyethyl acrylate, 2-hydroxypropyl acrylate, glyceryl diacrylate, and the like. Mixtures of these acrylates are also suitable. The methacrylate counterparts of the above acrylates can also be utilized.

The reaction of the prepolymer, the diisocyanate and the hydroxy acrylate is conventional and is performed in a suitable vessel. The mole ratio of prepolymer diol; diisocyanate: hydroxy (meth)acrylate can be in a range of 1:2: 2, respectively, to 5:6:2, respectively. These reactants together with the low Tg alkyl acrylate diluent monomer are admixed in a vessel with a minor amount of a catalyst for the urethane forming reaction, e.g., 0.03 to 0.1, preferably 0.04, weight percent of dibutyl tin dilaurate. A sparge of dry gas, e.g., dry air, nitrogen, carbon dioxide or the like, is utilized to ensure there is no moisture present which can adversely affect the reaction. The reaction is conducted at a temperature of 40°C to 80°C for a time period sufficient to consume substantially all of the hydroxy functionality of the prepolymer diol and the hydroxy (meth)acrylate and the free nitrogen-carbon-oxygen groups (NCO) of the diisocyanate.

A preferred method of producing the acrylated polyurethane is to admix the diisocyanate, the hydroxy (meth) acrylate, the low $T_g$ alkyl acrylate diluent monomer, and the catalyst in the vessel. The sparge is inserted into the admixture. The reaction is conducted at a temperature at the lower end of the above temperature range, e.g., 40° to 60°C., for a time period sufficient to consume substantially all of the hydroxy functionality of the hydroxy (meth)acrylate. This time period is typically between 1 and 3 hours. After substantially all of the hydroxy functionally is consumed, the prepolymer is introduced into the vessel with continued admixing and the temperature is increased to the upper end of the above temperature range, e.g., 60° to 80°C. This temperature is maintained for a time period sufficient to consume substantially all of the free NCO and the prepolymer functional groups. This time period typicallly is between 7 and 10 hours.

The number average molecular weight of the acrylated polyurethane is 2,500 to 10,000, preferably 3,000 to 5,000 daltons.

The coating composition also includes the (meth)acrylate of the $C_1$-$C_{10}$, preferably $C_8$-$C_9$, alkyl substituted phenol that is alkoxylated with a $C_2$-$C_4$ alkylene oxide so that it contains 1 to 10 moles of the oxide per mole of the phenol. Preferably, the (meth) acrylate of the alkoxylated phenol contains 3.5 to 4 moles of oxide per mole of the phenol.

Suitable alkylene oxides include ethylene oxide, propylene oxide, butylene oxide, and mixtures thereof. Presently ethylene oxide is preferred.

Representative alkoxylated acrylates include ethoxylated nonylphenol acrylate and propoxylated nonylphenol acrylate.

Commercially available illustrative acrylates of the alkoxylated phenol include alkoxylated nonyl phenol acrylates such as Aronix M-111, Aronix M-113 and Aronix M-117 from Toa Gosei, Japan.

The coating composition further includes at least one alkylacrylate having a $T_g$ below -45°C, preferably below -60°C. The $T_g$ below of the alkylacrylate can be as low as about -90°C. This alkylacrylate enhances low temperature microbending resistance.

Suitable alkylacrylates include n-hexylacrylate, 2-ethylhexyl acrylate, heptyl acrylate, n-octyl acrylate, isooctyl acrylate, n-nonyl acrylate and the like. Mixtures of these alkylacrylates are also suitable.

The coating composition can further include a monoethylenically unsaturated material having a high $T_g$ and a strong capacity for hydrogen bonding. These monoethylenically unsaturated materials typically have a $T_g$ greater than 40°C. and are illustrated by N-vinyl monomers such as N-vinyl pyrrolidone, N-vinyl caprolactam, mixtures thereof and the like. The $T_g$ of the monoethylenically unsaturated material can be as high as about 120°.

The wavelength of the light utilized to cure the coating compositions of the present invention can vary somewhat depending upon the photoinitiator selected. In present practice, the light utilized is usually in the ultraviolet range which extends from 200 to 400 nanometers (nm) however, light of a longer wavelength, e.g., light having a wavelength of up to 600 nm, preferably up to 520nm, can be utilized.

The photoinitiators utilized are conventional components of light curable ethylenically unsaturated coatings. Preferred photoinitiators are aryl ketones, e.g., benzophenone, acetophenone, diethoxy acetophenone, benzoin, benzil, anthrquinone, and the like. A commercial photoinitiator is illustrated by Irgacure 184 available from Ciba-Geigy Corp., Ardsley, NY.

Volatile organic solvents are preferably not utilized in the present coating composition.

The acrylated polyurethane is present in the composition in an amount in the range of 40 to 80, preferably 45 to 70 weight percent, based on the total weight of the coating composition.

The acrylate of the alkoxylated phenol is present in the coating composition in an amount in the range of 5 to 50, preferably 10 to 35 weight percent, based on the total weight of the coating composition.

The akylacrylate having a $T_g$ less than -45°C. is present in an amount of 5 to 30, preferably 10 to 20 weight percent, based on the total weight of the coating composition.

The monoethylenic material having a high $T_g$ can be present in the coating composition in a range of 1 to 15, preferably 2 to 4 weight percent, based on the total weight of the coating composition.

The photoinitiator is present in the coating composition in a range of 0.5 to 6, preferably 1 to 4 weight percent, based on the total weight of the coating composition.

The viscosity of the coating composition, as measured at a temperature of 25°C. using a Brookfield viscometer, is 3,000 to 12,000 centipoise (cp), preferably 4,000 to 10,000 cp 1 Poise = 0.1 Pas.

It is presently believed that the polyether groups present in the (meth)acrylate of the alkoxylated phenol function to soften the cured coating and provide adequate adhesion to the glass without reducing the water resistance. This is an unexpected result as typically ether groups introduce water sensitivity which reduces water resistance and wet adhesion.

The coating composition can further include conventional adhesion promoters, stabilizers and inhibitors.

Silane coupling agents are conventional adhesion promoters and typically can be present in an amount of about 1 weight percent. Illustrative silane coupling agents include gamma methacryloxypropyl trimethoxy silane, commercially available from Hüls, Bristol, PA, under the trade designation MEMO and gamma mercaptopropyl trimethoxy silane which is commercially available from Union Carbide 'under the designation A-189. Conventional stabilizers such as hindered amines which provide ultraviolet stability for the cured composition can be present in amounts less than 1 weight percent. Illustrative stabilizers include bis(2,2,6,6,-tetramethyl-4-piperidinyl) sebacate which is commercially available from Ciba-Geigy Corp., Ardsley, NY under the trade designation Tinuvin 770 and thiodiethylene (3,5-di-tert-butyl-4-hydroxy) hydrocinnamate, also commercially available from Ciba-Geigy Corp under the trade designation IRGANOX 1035. Free radical polymerization during production of the acrylated polyurethane can be inhibited by the use of an agent such as phenothiazine or butylated hydroxytoluene in an amount less than 0.1 weight percent.

The present compositions can be applied to glass fibers utilizing conventional processes.

The following Examples are presented by way of illustration and not limitation.

EXAMPLE 1

The (meth)acrylate-terminated polyurethane was prepared by admixing 2-hydroxethyl acrylate, isophorone diisocyanate, dibutyl tin dilaurate, octyl/decyl acrylate, and phenothiazine in the amounts disclosed at TABLE I, below, in a suitable vessel. Agitation and a dry air sparge were provided and maintained during the reaction. The temperature of the admixture was elevated to about 40°C and maintained at that temperature for about 2 hours. Thereafter, the polycarbonate diol was introduced into the vessel and mixed with the admixture. The temperature of the mixture was elevated to about 70°C and maintained at that temperature for a time period sufficient to consume substantially all of the free NCO.

TABLE I

| ACRYLATE-TERMINATED POLYCARBONATE DIOL-BASED POLYURETHANE | |
| --- | --- |
| Component | Parts (by weight) |
| Polycarbonate diol[1] | 55.50 |
| 2-hydroxyethyl acrylate | 5.46 |
| Isophorone diisocyanate | 19.01 |
| Octyl/decyl acrylate[2] | 19.94 |
| Dibutyltin dilaurate | .06 |
| Phenothiazine | .03 |

[1] Permanol KM 10-1773, commercially available from Permuthane Coatings, Peabody, MA.

[2] ODA, Commercially available from Radcure Specialties Inc. Louisville, KY

Aliquots of the above described acrylated polyurethane were admixed with various proportions of the other components utilized in the coating composition to produce the present coating composition A. The proportion of these other components and of the acrylated polyurethane are presented in TABLE II.

TABLE II

| COATING COMPOSITIONS | |
|---|---|
| Component | (parts by weight) |
| | A |
| Acrylated polyurethane[1] | 57.0 |
| Acrylate of an alkoxylated phenol[2] | 33.0 |
| N-vinyl pyrrolidone | 4.0 |
| Irgacure 184[3] | 4.0 |
| Silane[5] | 1.0 |
| Tinuvin 292[6] | 0.6 |
| Irganox 245[7] | 0.5 |

[1] The acrylated polyurethane of TABLE I was utilized.

[2] An alkoxylated nonyl phenol acrylate, commercially available from Toa Gosei, Japan under the trade designation Aronix M-113.

[3] An aryl ketone photoinitiator, commercially available from Ciba-Geigy Corp, Ardsley, NY.

[5] An adhesion promoter, commercially available from Hüls, Bristol, PA under the trade designation Dynasylan MEMO.

[6] A stabilizer, commercially available from Ciba-Geigy Corp., Ardsley. NY.

[7] A stabilizer, commercially available from Ciba-Geigy Corp., Ardsley, NY.

Composition A of TABLE II was prepared by admixing the components and mixing in the ingredients while heating to 60°C for 20 minutes.

The coating composition A is well adapted to provide a primary coating for optical glass fibers. This was not previously possible using the acrylated polyurethane utilized in composition A because modification of conventional acrylated polyurethane containing compositions to improve flexibility and softness resulted in a loss in water resistance, cure speed, and/or adhesion to glass.

The cure speed [Joules/square centimeter (J/sq (MPA)] and dry wet adhesion (grams), are presented in TABLE III, below. The procedures for determing the cure speed and physical properties are described hereinafter.

TABLE III

| CURE SPEED AND PHYSICAL PROPERTIES | | | |
|---|---|---|---|
| Coating Composition | Cure Speed (J/sq cm) | Modulus (MPA) | Adhesion-dry/wet (grams) |
| A | 0.5 | 2.0 | 60/40 |

The cure speed [Joules/square centimeter (J/sq cm)] indicates the number of J/sq cm required to obtain 95% of ultimate modulus of a 3 mil thick coating utilizing a "D" lamp from Fusion Curing Systems Rockville, MD. The "D" lamp emits radiation having a wavelength of about 200 to 470 nanometers with the peak radiation being at about 380 nanometers and the power output thereof is about 300 watts per linear inch. The cure speeds obtained are considered rapid by industrial standards. The optical glass fiber coating industry currently utilizes primary coating composition having cure speeds of about 1.0 J/sq cm.

A film for determination of the modulus of the coating was prepared by drawing down a 3 mil coating on glass plates using a Bird bar from Pacific Scientific, Silver Spring, MD. The coating was cured using the "D" lamp. The coating was cured at a dose of about 1 J/sq cm which provided complete cure. The film was then conditioned at $23 \pm 2°C$. and $50 \pm 5\%$ relative humidity for a minimum time period of 16 hours.

Six, 0.5 inch wide test specimens were cut from the film parallel to the direction of the draw down. Triplicate measurements of the dimension of each specimen were taken and the average utilized. The modulus of these specimens are then determined using an Instron Model 4201 from Instron Corp., Canton, MA operated in accordance with the instructions provided therewith.

To determine the dry and wet adhesion of a film to glass, films were prepared by drawing down 3 mil coatings on glass plates using the Bird bar. The coatings were cured using the "D" lamp.

The films were then conditioned at a temperature of $23 \pm 2°C$. and a relative humidity of $50 \pm 5\%$ for a time period of 7 days. A portion of the film was utilized to test dry adhesion. Subsequent to dry adhesion testing, the remainder of the film to be tested for wet adhesion was further conditioned at a temperature of $23 \pm 2°C$. and a relative humidity of 95% for a time period of 24 hours. A layer of a polyethylene wax/water slurry was applied to the surface of the further conditioned film to retain moisture.

The adhesion test was performed utilizing an apparatus including a universal testing instrument, e.g., an Instron Model 4201 commercially available from Instron Corp, Canton, MA, and a device, including a horizontal support and a pulley, positioned in the testing instrument.

After conditioning, sample specimens that appeared to be uniform and free of defects were cut in the direction of the draw down. Each specimen was 6 inches long an 1 inch wide and free of tears or nicks. The first one inch of each specimen was peeled back from the glass plate. The glass plate was secured to the horizontal support with the affixed end of the specimen adjacent to the pulley. A wire was attached to the peeled-back end of the specimen, run along the specimen and then run through the pulley in a direction perpendicular to the specimen. The free end of the wire was clamped in the upper jaw of the testing instrument which was then activated. The test was continued until the average force value becomes relatively constant.

This invention has been described in terms of specific embodiments set forth in detail, but it should be understood that these are by way of illustration only and that the invention is not necessarily limited thereto. Modifications and variations will be apparent from the disclosure and may be resorted to without departing from the spirit of the invention, as those skilled in the art will readily understand. Accordingly, such variations and modifications of the disclosed products are considered to be within the purview and scope of the invention and the following claims.

## Claims

1. A photocurable liquid coating composition adapted to provide a primary coating for an optical glass fiber comprising:

    (1) 40 to 80 weight percent, based on the total weight of the coating composition, of a (meth)acrylate-terminated polyurethane having a number average molecular weight of 2,500 to 10,000 daltons and being the reaction product of

    (i) a prepolymer consisting of carbon chains that can comprise oxygen and/or nitrogen atoms, having on average at least two prepolymer functional groups that are reactive with an isocyanate group, having a number average molecular weight of 500 to 3,000 daltons,
    (ii) a diisocyanate and
    (iii) a hydroxy (meth)acrylate;

    (2) 5 to 50 weight percent of a (meth)acrylate of a $C_1$-$C_{10}$ alkyl substituted phenol that is alkoxylated with a $C_2$-$C_4$ alkylene oxide and contains 1 to 10 moles of the oxide per mole of the phenol; and
    (3) 5 to 30 weight percent of at least one alkylacrylate having a $T_g$ below -45°C.

2. The coating composition in accordance with claim 1 wherein the alkylene oxide is ethylene oxide.

3. The coating composition in accordance with claim 1 or 2 wherein the (meth)acrylate of the alkoxylated phenol contains 3.5 to 4 moles of the oxide per mole of phenol.

4. The coating composition in accordance with any one of claims 1-3 wherein in the (meth)acrylate of the alkoxylated phenol the phenol is substituted with a $C_8$-$C_9$ alkyl group.

5. The coating composition in accordance with any one of claims 1-4 wherein the (meth)acrylate of the alkoxylated phenol is present in an amount in the range of 10 to 35 weight percent and the acrylated polyurethane is present in an amount in the range of 45 to 70 weight percent.

6. The coating in accordance with any one of claims 1-5 wherein the prepolymer is selected from the group consisting of polycarbonates, polyethers, polyesters and mixtures thereof.

7. The coating composition in accordance with claim 6 wherein the prepolymer is (a) a polycarbonate diol produced from an alkelyne diol having 2 to 12 carbon atoms, (b) a polycarbonate copolymer of a polyalkylene oxide and the alkylene diol or (c) an admixture of (a) and (b).

8. The coating composition in accordance with claim 7 wherein the prepolymer is (a) a polycarbonate diol produced from an alkylene diol having 4 to 8 polyalkylene oxide and the alkylene diol or (c) an admixture of (a) and (b).

9. The coating composition in accordance with any one of claims 1-8 wherein the prepolymer has a number average molecular weight of 800 to 2,000 daltons.

10. The coating composition in accordance with any one of claims 1-9 wherein the polyurethane has a number average molecular weight of 3,000 to 5,000 daltons.

11. The coating composition in accordance with any one of claims 1-10 further including 1 to 15 weight percent, based on the total weight of the coating composition of a monoethylenically unsaturated material having a $T_g$ greater than 40°C and a strong capacity for hydrogen bonding.

12. The coating composition in accordance with claim 11 wherein the monoethylenically unsaturated material is an N-vinyl monomer.

13. The coating composition in accordance with claim 11 or 12 including 2 to 4 weight percent, based on the total weight of the coating composition of the monoethylenically unsaturated material.

14. The coating composition in accordance with any one of claims 1-13 wherein the prepolymer is a prepolymer diol that has an average of at least two groups that are reactive with the isocyanate group and the mole ratio of prepolymer: diisocyanate: hydroxy(meth)acrylate utilized to produce the acrylated polyurethane is in a range of 1:2: 2, respectively, to 5:6:2, respectively.

15. An optical fiber coated with the composition in accordance with any one of claims 1-14.

**Revendications**

1. Une composition de revêtement liquide, photodurcissable qui est adaptée pour réaliser un revêtement primaire pour une fibre optique en verre, comportant :

(1) de 40 à 80 % en poids, en se basant sur le poids total de la composition de revêtement, d'un polyuréthane à terminaison (méth) acrylate, qui présente un poids moléculaire moyen en nombre de 2 500 à 10 000 daltons et qui est le produit de la réaction entre :

(i) un prépolymère constitué de chaînes de carbone qui peuvent comporter des atomes d'oxygène et/ou d'azote, ayant en moyenne au moins deux groupes fonctionnels prépolymère qui sont réactifs avec un groupe isocyanate, ayant un poids moléculaire moyen en nombre de 500 à 3000 daltons,
(ii) un diisocyanate et,
(iii) un hydroxy (méth)acrylate ;

(2) de 5 à 50 % en poids d'un (méth) acrylate d'un phénol à substitution alkyle en $C_1$ à $C_{10}$ qui est alcoxylé par un oxyde d'alkylène en $C_2$ à $C_4$ et renferme de 1 à 10 moles d'oxyde par mole de phénol ; et
(3) de 5 à 30 % en poids d'au moins un acrylate d'alkyle ayant une $T_g$ inférieure à -45°C.

2. La composition de revêtement selon la revendication 1, dans laquelle l'oxyde d'alkylène est l'oxyde d'éthylène.

3. La composition de revêtement selon la revendication 1 ou 2, dans laquelle le (méth)acrylate du phénol alcoxylé renferme de 3,5 à 4 moles de l'oxyde par mole du phénol.

4. La composition de revêtement selon l'une quelconque des revendications 1 à 3, dans laquelle dans le (méth) acrylate du phénol alcoxylé, le phénol est substitué par un groupe alkyle en $C_8$ à $C_9$.

5. La composition de revêtement selon l'une quelconque des revendications 1 à 4, dans laquelle le (méth)acrylate du phénol alcoxylé est présent en une quantité dans la gamme de 10 à 35 % en poids et le polyuréthane acrylé est présent en une quantité dans la gamme de 45 à 70 % en poids.

6. La composition de revêtement selon l'une quelconque des revendications 1 à 5, dans laquelle le prépolymère est choisi dans le groupe constitué des polycarbonates, des polyéthers, des polyesters et des mélanges de ceux-ci.

7. La composition de revêtement selon la revendication 6, dans laquelle le prépolymère est (a) un polycarbonate diol préparé à partir d'un alcylène diol ayant de 2 à 12 atomes de carbone, (b) un copolymère de polycarbonate d'un oxyde de polyalkylène et d'un alkylène diol, ou (c) un mélange de (a) et de (b).

8. La composition de revêtement selon la revendication 7, dans laquelle le prépolymère est (a) un polycarbonate diol préparé à partir d'un alkylène diol ayant de 4 à 8 oxydes de polyalkylène et de l'alkylène diol, ou (c) un mélange de (a) et de (b).

9. La composition de revêtement selon l'une quelconque des revendications 1 à 8, dans laquelle le prépolymère présente un poids moléculaire moyen en nombre de 800 à 2000 daltons.

10. La composition de revêtement selon l'une quelconque des revendications 1 à 9, dans laquelle le polyuréthane présente un poids moléculaire moyen en nombre de 3000 à 5000 daltons.

11. La composition de revêtement selon l'une quelconque des revendications 1 à 10, comportant en outre de 1 à 15 % en poids, en se basant sur le poids total de la composition de revêtement d'un produit à insaturation monoéthylénique, qui présente une $T_g$ supérieure à 40 °C et une forte capacité pour la liaison hydrogène.

12. La composition de revêtement selon la revendication 11, dans laquelle le produit à insaturation monoéthylénique est un monomère N-vinylique.

13. La composition de revêtement selon la revendication 11 ou 12, comportant de 2 à 4 % en poids, en se basant sur le poids total de la composition de revêtement du produit à insaturation monoéthylénique.

14. La composition de revêtement selon l'une quelconque des revendications 1 à 13, dans laquelle le prépolymère est un prépolymère diol qui présente une moyenne d'au moins deux groupes qui sont réactifs avec le groupe isocyanate et le rapport molaire du prépolymère :diisocyanate :hydroxy(méth)acrylate utilisé pour préparer le polyuréthane acrylé se situe dans une gamme de 1:2:2, respectivement, à 5:6:2, respectivement.

15. Une fibre optique revêtue de la composition selon l'une quelconque des revendications 1 à 14.

**Patentansprüche**

1. Fotoaushärtbare flüssige Beschichtungszusammensetzung, welche zum Vorsehen einer primären Beschichtung für eine optische Glasfaser geeignet ist, und welche umfaßt:

(1) 40 bis 80 Masse-%, bezogen auf die Gesamtmasse der Beschichtungszusammensetzung, eines Polyurethans mit (Meth)-acrylat-Endgruppen, das eine zahlenmittlere Molmasse von 2 500 bis 10 000 Dalton aufweist und das Reaktionsprodukt ist von

(i) einem Vorpolymer, bestehend aus Kohlenstoffketten, die Sauerstoff- und/oder Stickstoffatome umfassen können, mit durchschnittlich zumindest zwei Vorpolymer-funktioneilen Gruppen, die mit einer Isocyanat-Gruppe reaktiv sind, mit einer zahlenmittleren Molmasse von 500 bis 3 000 Dalton,
(ii) einem Diisocyanat und
(iii) einem Hydroxy(meth)acrylat;

(2) 5 bis 50 Masse-% eines (Meth)acrylats eines $C_1$-$C_{10}$-Alkyl-substituierten Phenols, das mit einem $C_2$-$C_4$-Alkylenoxid alkoxyliert ist und 1 bis 10 Mol des Oxids pro Mol des Phenols enthält; und
(3) 5 bis 30 Masse-% zumindest eines Alkylacrylats mit einer $T_g$ von weniger als -45°C.

2. Beschichtungszusammensetzung nach Anspruch 1, worin das Alkylenoxid Ethylenoxid ist.

3. Beschichtungszusammensetzung nach Anspruch 1 oder 2, worin das (Meth)acrylat des alkoxylierten Phenols 3,5 bis 4 Mol des Oxids pro Mol Phenol enthält.

4. Beschichtungszusammensetzung nach einem der Ansprüche 1 bis 3, worin im (Meth)acrylat des alkoxylierten Phenols das Phenol mit einer $C_8$-$C_9$-Alkyl-Gruppe substituiert ist.

**5.** Beschichtungszusammensetzung nach einem der Ansprüche 1 bis 4, worin das (Meth)acrylat des alkoxylierten Phenols in einer Menge im Bereich von 10 bis 35 Masse-% vorliegt, und das acrylierte Polyurethan in einer Menge im Bereich von 45 bis 70 Masse-% vorliegt.

**6.** Beschichtungszusammensetzung nach einem der Ansprüche 1 bis 5, worin das Vorpolymer ausgewählt ist aus der Gruppe bestehend aus Polycarbonaten, Polyethern, Polyestern und Mischungen hievon.

**7.** Beschichtungszusammensetzung nach Anspruch 6, worin das Vorpolymer (a) ein Polycarbonatdiol, das aus einem Alkylendiol mit 2 bis 12 Kohlenstoffatomen hergestellt wird, (b) ein Polycarbonat-Copolymer eines Polyalkylenoxids und des Alkylendiols oder (c) eine Mischung von (a) und (b) ist.

**8.** Beschichtungszusammensetzung nach Anspruch 7, worin das Vorpolymer (a) ein Polycarbonatdiol, das aus einem Alkylendiol mit 4 bis 8 Kohlenstoffatomen hergestellt wird, (b) ein Polycarbonat-Copolymer eines Polyalkylenoxids und des Alkylendiols oder (c) eine Mischung von (a) und (b) ist.

**9.** Beschichtungszusammensetzung nach einem der Ansprüche 1 bis 8, worin das Vorpolymer eine zahlenmittlere Molmasse von 800 bis 2 000 Dalton aufweist.

**10.** Beschichtungszusammensetzung nach einem der Ansprüche 1 bis 9, worin das Polyurethan eine zahlenmittlere Molmasse von 3 000 bis 5 000 Dalton aufweist.

**11.** Beschichtungszusammensetzung nach einem der Ansprüche 1 bis 10, welche ferner 1 bis 15 Masse-%, bezogen auf die Gesamtmasse der Beschichtungszusammensetzung, eines monoethylenisch ungesättigten Materials mit einer $T_g$ von mehr als 40°C und einer starken Wasserstoff-Bindungsfähigkeit umfaßt.

**12.** Beschichtungszusammensetzung nach Anspruch 11, worin das monoethylenisch ungesättigte Material ein N-Vinyl-Monomer ist.

**13.** Beschichtungszusammensetzung nach Anspruch 11 oder 12, welche 2 bis 4 Masse-%, bezogen auf die Gesamtmasse der Beschichtungszusammensetzung, des monoethylenisch ungesättigten Materials enthält.

**14.** Beschichtungszusammensetzung nach einem der Ansprüche 1 bis 13, worin das Vorpolymer ein Vorpolymerdiol ist, das durchschnittlich zumindest zwei Gruppen aufweist, die mit der Isocyanat-Gruppe reaktiv sind, und das zur Herstellung des acrylierten Polyurethans verwendete Molverhältnis Vorpolymer:Di-isocyanat:Hydroxy(meth)acrylat im Bereich von jeweils 1:2:2 bis jeweils 5:6:2 liegt.

**15.** Optische Faser, welche mit der Zusammensetzung nach einem der Ansprüche 1 bis 14 beschichtet ist.